# EUROPÄISCHE PATENTSCHRIFT

(11) **EP 2 173 535 B1**
(45) Veröffentlichungstag und Bekanntmachung des Hinweises auf die Patenterteilung: **14.12.2011**
(21) Anmeldenummer: 08784313.2
(22) Anmeldetag: 04.07.2008
(51) Int. Cl.: B29C 49/64, B29C 35/08, B29C 49/68, B29C 49/12, B29C 49/06, B29C 49/16

(54) **Verfahren und Vorrichtung zur Blasformung von Behältern**
Method and device for the blow moulding of containers
Procédé et dispositif de moulage par soufflage de récipients

(30) Priorität: 07.07.2007 DE 102007031771
(43) Veröffentlichungstag der Anmeldung: 14.04.2010
(73) Patentinhaber: KHS Corpoplast GmbH, 22145 Hamburg (DE)
(72) Erfinder: BAUMGARTE, Rolf, 22926 Ahrensburg (DE); LITZENBERG, Michael, 21502 Geesthacht (DE); LEWIN, Frank, 22889 Tangstedt (DE); HAESENDONCKX, Frank, 22395 Hamburg (DE); BALKAU, Karl-Heinz, 22113 Oststeinbek (DE); MATTHIESEN, Martin, 22359 Hamburg (DE); LINKE, Michael, 22047 Hamburg (DE)
(74) Vertreter: Klickow, Hans-Henning
(86) Internationale Anmeldenummer: PCT/DE2008/001127
(87) Internationale Veröffentlichungsnummer: WO 2009/006885

(56) Entgegenhaltungen:
- WO-A-01/62463
- WO-A-02/32652
- DE-A1- 3 101 282
- DE-U1- 20 311 657
- DE-U1-202004 010 454

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird, und bei dem Reflektionen innerhalb der Heizstrecke durch eine räumliche Anordnung einer Mehrzahl von Reflektionsflächen derart ausgerichtet werden, daß im Bereich des Vorformlings eine vorgebbare wärmeverteilung generiert wird.

Die Erfindung betrifft darüber hinaus eine Vorrichtung zur Blasformung von Behältern aus einem thermoplastischen Material, die mindestens eine entlang eines Transportweges eines vorformlings angeordnete Heizstrecke und eine mit einer Blasform versehene Blasstation aufweist, und bei der innerhalb der Heizstrecke Reflektoren angeordnet sind, die eine Mehrzahl von Reflektionsflächen aufweisen und bei der die Reflektionsflächen mit einer räumlichen Ausrichtung derart versehen sind, daß Strahlungswege direkt von den Heizstrahlern emittierter Heizstrahlung und Strahlungswege reflektierter Heizstrahlung zur Generierung einer vorgebbaren wärmeverteilung im Bereich der Vorformlinge überlagert sind.

Bei einer Behälterformung durch Blasdruckeinwirkung werden Vorformling aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Binleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der vorformlinge in lotrechter Richtung nach unten orientiert sind, werden die vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der vorformlinge eingeführt, die die Vorformlinge festklemmen.

Aus der DE 20 2004 010 454 U1 ist es bereits bekannt, eine Heizstrecke für Vorformlinge derart zu konstruieren, daß seitlich sowohl hinter den Heizstrahlern als auch den Heizstrahlern gegenüberliegend angeordnete Reflektoren verwendet werden. Der den Heizstrahlern gegenüberliegend angeordnete Reflektor besitzt ein Reflektionsprofil.

In der DE 203 11 657 U1 wird eine tunnelartige Heizstrecke mit einem geschlossenen Boden beschrieben. Die Vorformlinge werden mit ihren Mündungsabschnitten in lotrechter Richtung nach oben weisend durch die Heizstrecke transportiert. Ein Mündungsabschnitt des Vorformlings wird durch Blenden gegenüber einer einwirkenden Heizstrahlung geschützt.

In der WO 02/32652 A1 wird eine Heizeinrichtung für Vorformlinge beschrieben, bei der die Vorformlinge mit ihren Mündungsabschnitten nach unten gewandt durch die Heizstrecke transportiert werden. Die Heizstrecke ist somit im Bodenbereich offen. In lotrechter Richtung nach oben ist die Heizstrecke bereichsweise von einem Reflektor begrenzt.

Ein wesentliches Problem bei der Verwendung von konventionellen Infrarot-Strahlern zur Beheizung der Vorformlinge besteht darin, daß der überwiegende Strahlungsanteil bereits in der unmittelbaren Nähe der Oberfläche des Vorformlings in Wärme umgesetzt wird und daß eine Temperierung der inneren Wandungsbereiche des Vorformlings nur durch Wärmeausbreitung innerhalb des thermoplastischen Materials erfolgt. Da das thermoplastische Material ausgeprägte thermisch isolierende Eigenschaften aufweist, ergibt sich für eine ausreichende Wärmeausbreitung ein Zeitbedarf für die Beheizung der Vorformlinge von etwa 20 Sekunden. Zur Vermeidung einer Überhitzung der Oberflächenbereiche des Vorformling erfolgt gleichzeitig zur Beheizung auch ein Anblasen mit Kühlluft. Hieraus resultiert ein relativ hoher Energieaufwand für die Durchführung der Beheizung.

Zur Unterstützung einer möglichst gleichmäßigen aktiven Beheizung der vorformlinge durch die Wanddicke des Vorformlings hindurch ist es ebenfalls bekannt, alternativ oder ergänzend zu einer Beheizung mit Infrarotstrahlern auch eine Beheizung mit HF-Strahlung bzw. Mikrowellenstrahlung durchgeführt. Diese Strahlungen machen jedoch Abschirmungen erforderlich, um einen Strahlungsaustritt zu verhindern bzw. abzuschwächen. Darüber hinaus erweist sich eine Umsetzung dieser Strahlung im Vorformlingsmaterial in Wärme als zeitaufwendig, so daß keine nennenswerte Verkürzung der erforderlichen Heizzeiten erreicht werden konnte.

Zur verkürzung der erforderlichen Heizzeit ist es ebenfalls bereits bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Zur Optimierung der Energieausbeute werden derartige Heizstrekken mit einer Vielzahl von Spiegelflächen ausgestattet, um eine Absorption der Wärmestrahlung durch Bauteile der Heizstrecke möglichst zu vermeiden oder zumindest stark zu reduzieren. Bei einem Betrieb derartiger Heizstrecken zeigt es sich jedoch, daß die Wärmeverteilung innerhalb der Vorformlinge von vorgegebenen Temperierungsprofilen abweicht.

Aufgabe der vorliegenden Erfindung ist es, ein Verfahren der einleitend genannten Art derart zu verbessern, daß innerhalb der Vorformlinge eine vorgegebene Temperaturverteilung erreicht wird.

Diese Aufgabe wird erfindungsgemäß dadurch gelöst, daß die vom Heizstrahler emittierte Heizstrahlung von mindestens einem einem geschlossenen Boden eines Heizkanals gegenüberliegend angeordneten Reflektor reflektiert wird.

Weitere Aufgabe der vorliegenden Erfindung ist es, eine Vorrichtung der einleitend genannten Art derart zu konstruieren, daß die Vorformlinge mit einem vorgebbaren Temperaturprofil versehen werden.

Diese Aufgabe wird erfindungsgemäß dadurch gelöst, daß im Bereich der Heizstrecke ein Heizkanal angeordnet ist, der von einem geschlossenen Boden begrenzt ist und bei dem gegenüberliegend zum Boden ein Reflektor angeordnet ist.

Erfindungsgemäß wurde erkannt, daß die Überlagerung direkt von den Heizstrahlern emittierter wärmeenergie und der von den Reflektoren reflektierte Wärmeenergie in der Regel nicht zu einer gleichmäßigen Energieverteilung innerhalb der Heizstrecke führt, sondern daß sich eine ungleichmäßige wärmeverteilung einstellt, die eine entsprechende ungleichmäßige Beheizung der Vorformlinge zur Folge hat. Durch die Erfindung werden die Reflektionsflächen deshalb derart gestaltet und angeordnet, daß gezielt im Bereich der vorformlinge eine Überlagerung der Strahlungswege derart realisiert ist, daß sich die vorgebbare wärmeverteilung erzeugen läßt.

Eine hohe Heizeffektivität kann dadurch erreicht werden, daß der Vorformling durch eine tunnelartige Heizstrecke hindurch transportiert wird.

Ein hoher Anteil vom thermoplastischen Material in Wärme umsetzbarer Heizstrahlung wird dadurch bereitgestellt, daß der Vorformling von NIR-Strahlern temperiert wird. Ebenfalls sind aber beispielsweise IR-Stahler, Mikrowellenheizungen, HF-Heizungen oder Diodenheizungen verwendbar.

Strahlungsverluste können dadurch vermindert werden, daß von den Heizstrahlern emittierte Heizstrahlung von mindestens einem hinter den Heizstrahlern angeordneten Stahlerreflektor in Richtung auf den Vorformling reflektiert wird.

Ebenfalls trägt es zur Heizeffektivität bei, daß vom Heizstrahler emittierte Heizstrahlung von mindestens einem den Heizkanal begrenzenden Seitenreflektor in Richtung auf den Vorformling reflektiert wird.

Eine weitere Verbesserung des wirkungsgrades bei der Beheizung wird dadurch erreicht, daß die vom Heizstrahler emittierte Heizstrahlung von mindestens einem einem Boden des Heizkanals gegenüberliegend angeordneten Reflektor reflektiert wird.

Eine gezielte Vorgabe von Reflektionsrichtungen kann dadurch erfolgen, daß die Heizstrahlung von einem mit einer konturierten Reflektionsfläche versehenen Reflektor reflektiert wird.

Eine zweckmäßige Materialauswahl besteht darin, daß die Heizstrahlung von einem metallischen Reflektor reflektiert wird. Der Reflektor kann beispielsweise aber auch aus Keramik oder anderen Materialien bestehen.

Unerwünschte Aufheizungen können dadurch vermieden oder verringert werden, daß mindestens ein Reflektor von einem Kühlgas beaufschlagt wird.

Eine effektive und gezielte Kühlung wird dadurch unterstützt, daß das Kühlgas durch ein Hohlprofil hindurch geleitet wird.

Ein zweckmäßiges Reflektionsprofil wird dadurch bereitgestellt, daß eine vom Reflektor bereitgestellte konturierte Reflektionsfläche als ein in Richtung auf den Heizkasten offenes Wölbungsprofil positioniert wird. Eine unerwünschte Erhitzung des Vorformling im Mündungsabschnitt kann dadurch verhindert werden, daß der Vorformling im Bereich eines Mündungsabschnittes gegenüber von einwirkender Heizstrahlung abgeschirmt wird. Insbesondere ist daran gedacht, daß der Vorformling unterhalb eines Stützringes gegenüber von einwirkender Heizstrahlung abgeschirmt wird.

Eine effektive Abschirmung vorgewählter Bereiche des Vorformlings gegenüber einwirkender Heizstrahlung kann dadurch erreicht werden, daß ein Kragen zur Abschirmung des Mündungsabschnittes des Vorformlings mit einem Abstand von höchstens 5 mm zu einer Seitenwandung des Vorformlings positioniert wird.

Eine frequenzselektive Beheizung wird dadurch unterstützt, daß die vom Heizstrahler emittierte Heizstrahlung durch mindestens eine Filterscheibe hindurchgeleitet wird.

Eine unerwünschte Aufheizung der Filterscheibe wird dadurch vermieden, daß die Filterscheibe gekühlt wird.

Zur Durchführung eines Dauerbetriebes erweist es sich als vorteilhaft, daß der Seitenreflektor gekühlt wird.

Ebenfalls wird eine zuverlässige Betriebsfähigkeit dadurch unterstützt, daß der dem Boden des Heizkanals gegenüberliegend angeordnete Reflektor gekühlt wird.

In den zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Heizmoduls im Bereich der Heizstrecke und
- Fig. 6: einen Querschnitt durch das Heizmodul gemäß Fig. 5.

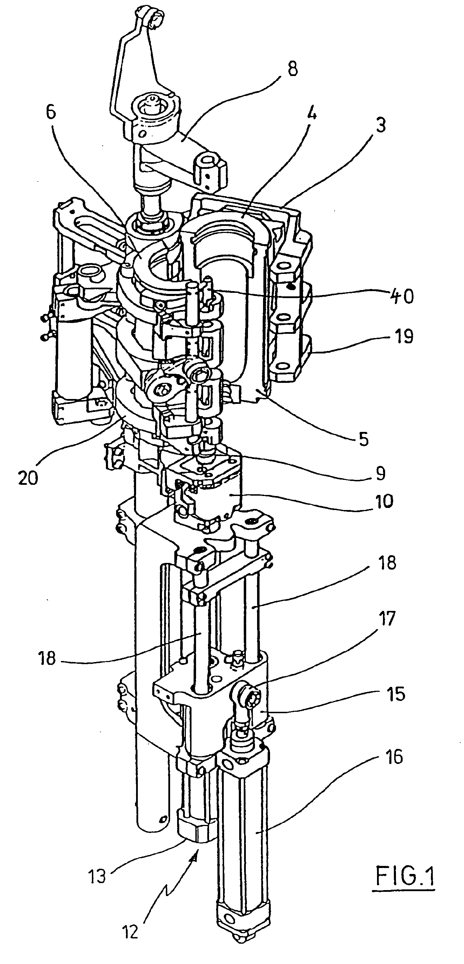

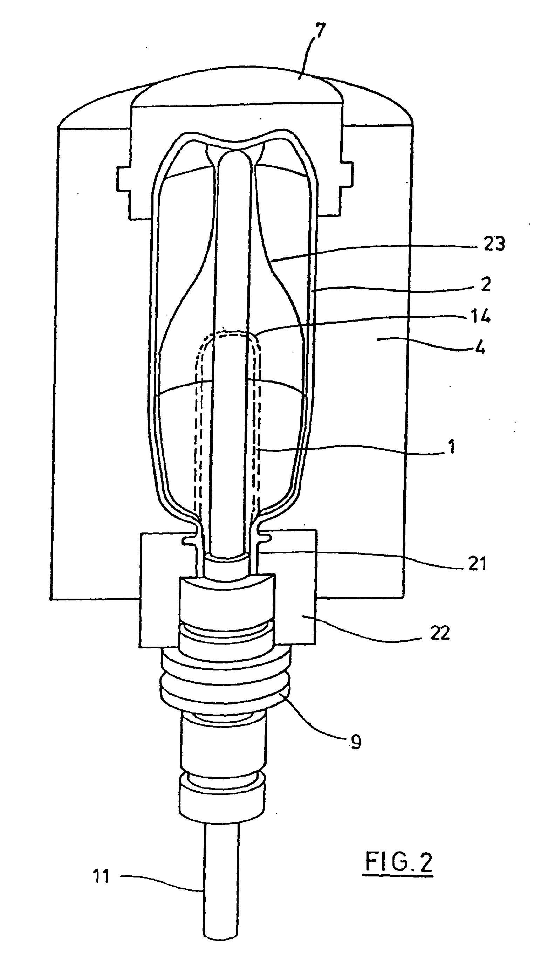

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

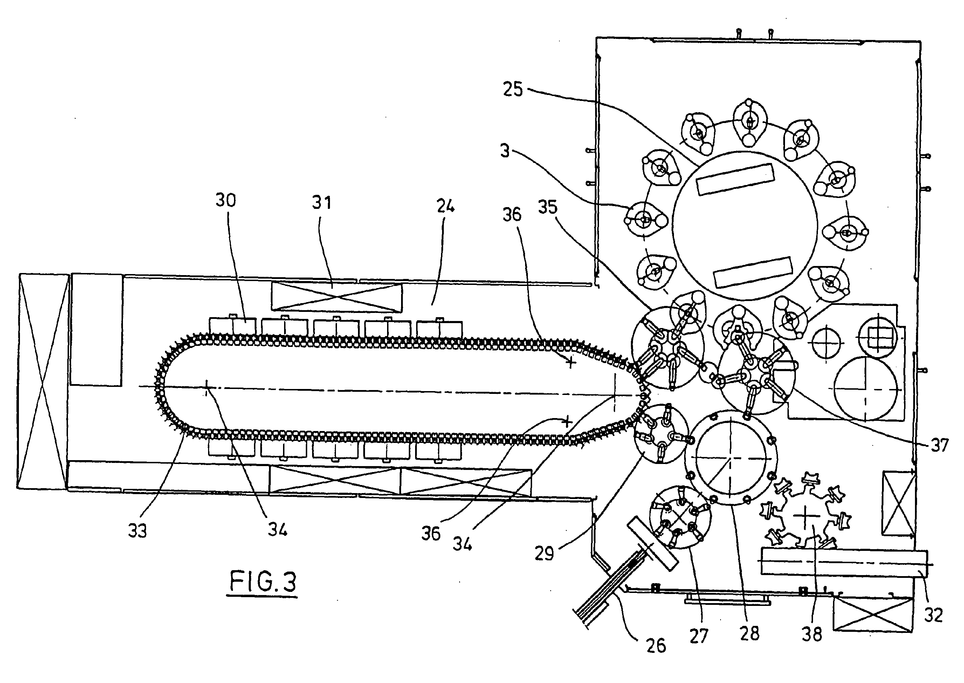

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die vorformlinge (1) zu temperieren. Nach einer ausreichenden Temperierung der Vorformling (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der vorformlinge (1) eingehalten werden. Darüber hinaus können vorteilhafte wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

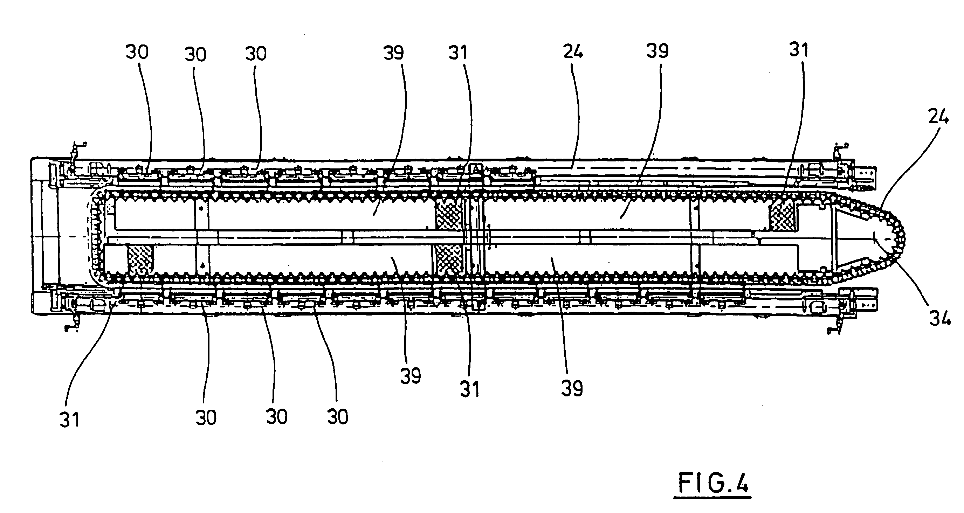

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

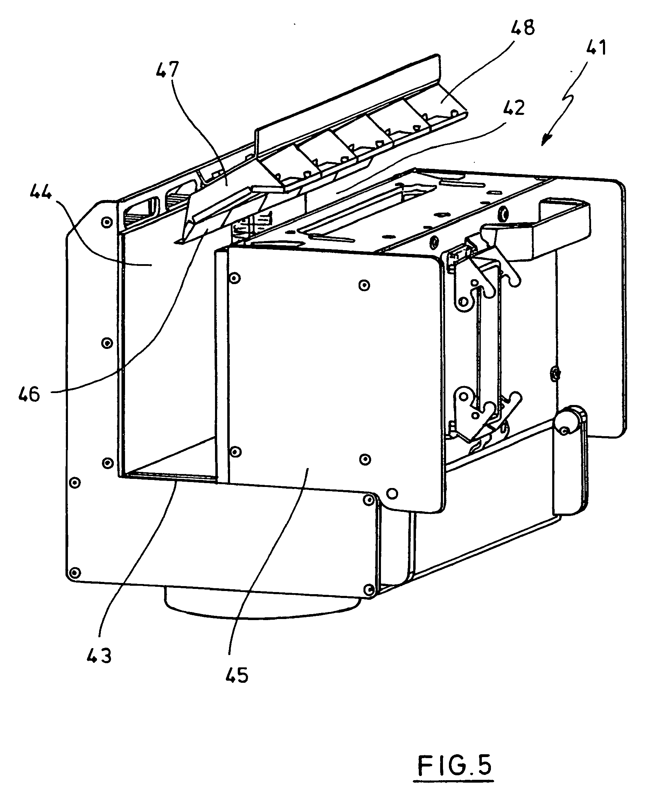

Fig. 5 zeigt eine perspektivische Darstellung eines Heizmoduls (41), das zur Anordnung im Bereich der Heizstrecke (24) vorgesehen ist. Das Heizmodul (41) ist mit einem Heizkanal (42) versehen, durch den die Vorformlinge (1) hindurchbewegt werden. Der Heizkanal (42) ist im wesentlichen entsprechend einem U-Profil ausgebildet und weist einen geschlossenen Boden (43) auf. Seitlich wird der Heizkanal (42) von einem Seitenreflektor (44) sowie von einem Heizkasten (45) begrenzt. Im Bereich des Heizkastens (45) sind die in Fig. 5 nicht erkennbaren Heizstrahler (30) positioniert.

Dem Boden (43) gegenüberliegend wird der Heizkanal (42) von einem Reflektor (46) begrenzt. Der Reflektor (46) ist beim dargestellten Ausführungsbeispiel als eine dem Heizkanal (42) zugewandte Wandung eines Luftleitelementes (47) ausgebildet, das einen Strömungskanal (48) begrenzt.

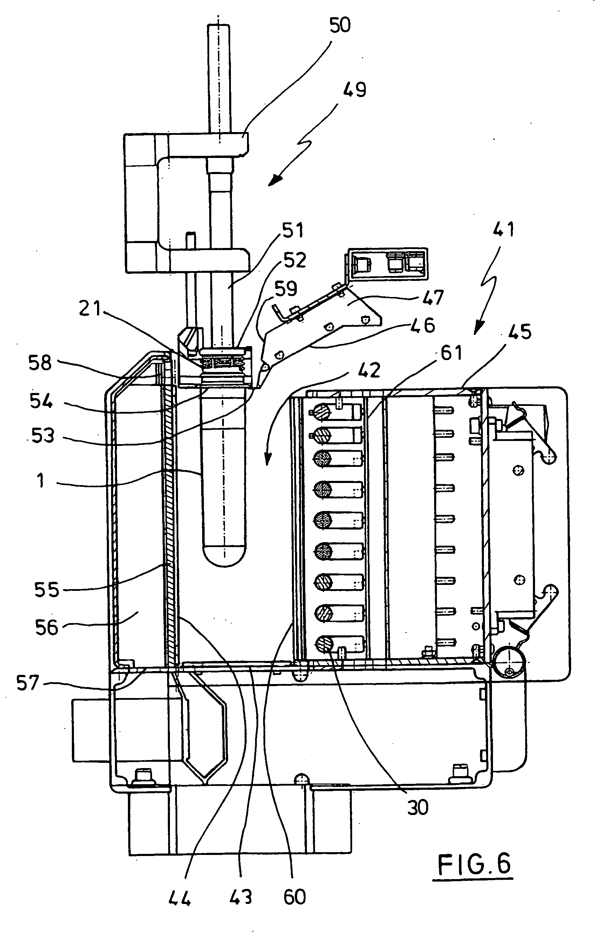

Fig. 6 zeigt einen Querschnitt durch das Heizmodul (41) gemäß Fig. 5 mit zusätzlich eingezeichnetem Vorformling (1) und Halteelement (49). Das Halteelement (49) weist einen Träger (50) auf, der ein stangenartiges Transportelement (51) führt. Das Transportelement (51) ist im Bereich seiner dem Vorformling (1) zugewandten Ausdehnung mit einem Fixierkopf (52) verbunden, der in den Mündungsabschnitt (21) des Vorformlings (1) einführbar und in diesem Bereich verspannbar ist. Der Vorformling (1) kann hierdurch vom Transportelement (51) in einer definierten Positionierung durch den Heizkanal (42) hindurch transportiert werden.

Beim dargestellten Ausführungsbeispiel weist der Reflektor (46) einen benachbart zum Mündungsabschnitt (21) angeordneten Kragen (53) auf, der den Mündungsabschnitt (21) und einen Stützring (54) des Vorformlings (1) gegenüber einer Einwirkung von Heizstrahlung abschirmt, um in diesem Bereich eine Aufheizung zu vermeiden oder zu vermindern.

Aus Fig. 6 ist ebenfalls erkennbar, daß der Seitenreflektor (44) von einem Kühlkörper (55) gehaltert ist, der einen Strömungskanal (56) aufweist. In den Strömungskanal strömt durch eine Einstömöffnung (57) hindurch Kühlluft ein und tritt durch eine Ausströmöffnung (58) wieder aus dem Strömungskanal (56) aus. Insbesondere ist daran gedacht, die Einströmöffnung (57) in einem in lotrechter Richtung unteren Bereich des Strömungskanals (56) und die Ausströmöffnung (58) in einem in lotrechter Richtung oberen seitlichen Bereich des Strömungskanals (56) anzuordnen. Eine Höhenpositionierung der Ausströmöffnung (58) erfolgt vorzugsweise derart, daß diese auf einem Höhenniveau wie der Mündungsabschnitt (21) des Vorformlings (1) angeordnet ist. Die aus dem Kühlkörper (55) austretende Kühlluft umströmt somit den Mündungsabschnitt (21) und führt zu dessen Kühlung.

Insbesondere ist auch daran gedacht, der Ausströmöffnung (58) gegenüberliegend eine Einströmöffnung (59) des Luftleitelementes (57) zu positionieren. Die aus dem Kühlkörper (55) austretende Luft wird somit auch durch das Luftleitelement (47) hindurchgeführt und verursacht eine Kühlung des Reflektors (46).

Im Bereich des Heizkastens (45) sind eine Mehrzahl von Heizstrahlern (30) in lotrechter Richtung übereinander angeordnet. Zur Realisierung einer frequenzselektiven Beheizung ist zwischen den Heizstrahlern (30) und dem Heizkanal (42) eine Filterscheibe (60) angeordnet, die vorzugsweise aus einem geeigneten Quarzglas besteht. Gemäß einer vorteilhaften Ausführungsform werden sowohl die Heizstrahler (30) als auch die Filterscheibe (60) von Kühlluft temperiert.

Im Bereich einer der Filterscheibe (60) abgewandten Richtung hinter den Heizstrahlern (30) ist ein Stahlerreflektor (61) angeordnet, der vorzugsweise eine profilierte Reflektoroberfläche aufweist. Die Reflektoroberfläche ist vorzugsweise derart strukturiert, daß eine Rückstrahlung in die Heizstrahler (30) hinein vermieden wird und die Ausbildung einer geeigneten wärmeverteilung im Bereich des Heizkanals (42) unterstützt wird.

Der Reflektor (46) ist gemäß dem Ausführungsbeispiel in Fig. 6 derart geformt, daß eine trapezartige Grundkontur bereitgestellt ist, wobei das Trapez in Richtung auf den Heizkasten (45) offen ist. Ausgehend von dieser Trapezkontur erstreckt sich der Kragen (53) im wesentlichen horizontal in Richtung auf den Vorformling (1).

Der Reflektor (46) ist vorzugsweise aus Metall ausgebildet. Insbesondere ist an die Verwendung von poliertem oder verspiegeltem Aluminium gedacht.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter (2) umgeformt wird, und bei dem Reflektionen innerhalb der Heizstrecke (24) durch eine räumliche Anordnung einer Mehrzahl von Reflektionsflächen derart ausgerichtet werden, daß im Bereich des Vorformlings (1) eine vorgebbare Wärmeverteilung generiert wird, **dadurch gekennzeichnet, daß** die vom Heizstrahler (30) emittierte Heizstrahlung von mindestens einem einem geschlossenen Boden (43) eines Heizkanals (42) gegenüberliegend angeordneten Reflektor (46) reflektiert wird.

2. Verfahren nach Anspruch 1, **dadurch gekennzeichnet, daß** der Vorformling (1) durch eine tunnelartige Heizstrecke hindurch transportiert wird.

3. Verfahren nach Anspruch 1 oder 2, **dadurch gekennzeichnet, daß** der Vorformling (1) von NIR-Strahlern temperiert wird.

4. Verfahren nach einem der Ansprüche 1 bis 3, **dadurch gekennzeichnet, daß** von den Heizstrahlern (30) emittierte Heizstrahlung von mindestens einem hinter den Heizstrahlern (30) angeordneten Stahlerreflektor (61) in Richtung auf den Vorformling (1) reflektiert wird.

5. Verfahren nach einem der Ansprüche 1 bis 4, **dadurch gekennzeichnet, daß** vom Heizstrahler (30) emittierte Heizstrahlung von mindestens einem den Heizkanal (42) begrenzenden Seitenreflektor (44) in Richtung auf den Vorformling (1) reflektiert wird.

6. Verfahren nach einem der Ansprüche 1 bis 5, **dadurch gekennzeichnet, daß** die Heizstrahlung von einem mit einer konturierten Reflektionsfläche versehenen Reflektor (46) reflektiert wird.

7. Verfahren nach Anspruch 6, **dadurch gekennzeichnet, daß** die Heizstrahlung von einem metallischen Reflektor (46) reflektiert wird.

8. Verfahren nach einem der Ansprüche 1 bis 7, **dadurch gekennzeichnet, daß** mindestens ein Reflektor von einem Kühlgas beaufschlagt wird.

9. Verfahren nach Anspruch 8, **dadurch gekennzeichnet, daß** das Kühlgas durch ein Hohlprofil hindurch geleitet wird.

10. Verfahren nach einem der Ansprüche 1 bis 9, **dadurch gekennzeichnet, daß** eine vom Reflektor (46) bereitgestellte konturierte Reflektionsfläche als ein in Richtung auf den Heizkasten (45) offenes wölbungsprofil positioniert wird.

11. Verfahren nach einem der Ansprüche 1 bis 10, **dadurch gekennzeichnet, daß** der Vorformling (1) im Bereich eines Mündungsabschnittes (21) gegenüber von einwirkender Heizstrahlung abgeschirmt wird.

12. Verfahren nach Anspruch 11, **dadurch gekennzeichnet, daß** der Vorformling (1) unterhalb eines Stützringes (54) gegenüber von einwirkender Heizstrahlung abgeschirmt wird.

13. Verfahren nach einem der Ansprüche 1 bis 12, **dadurch gekennzeichnet, daß** ein Kragen (53) zur Abschirmung des Mündungsabschnittes (21) des Vorformlings (1) mit einem Abstand von höchstens 5 mm zu einer Seitenwandung des Vorformlings (1) positioniert wird.

14. Verfahren nach einem der Ansprüche 1 bis 13, **dadurch gekennzeichnet, daß** die vom Heizstrahler (30) emittierte Heizstrahlung durch mindestens eine Filterscheibe (60) hindurchgeleitet wird.

15. Verfahren nach Anspruch 14, **dadurch gekennzeichnet, daß** die Filterscheibe (60) gekühlt wird.

16. Verfahren nach einem der Ansprüche 1 bis 15, **dadurch gekennzeichnet, daß** der Seitenreflektor (44) gekühlt wird.

17. Verfahren nach einem der Ansprüche 1 bis 16, **dadurch gekennzeichnet, daß** der dem Boden (43) des Heizkanals (42) gegenüberliegend angeordnete Reflektor (46) gekühlt wird.

18. Vorrichtung zur Blasformung von Behältern (2) aus einem thermoplastischen Material, die mindestens eine entlang eines Transportweges eines Vorformlings (1) angeordnete Heizstrecke (24) und eine mit einer Blasform versehene Blasstation aufweist, und bei der innerhalb der Heizstrecke (24) Reflektoren (44, 46, 61) angeordnet sind, die eine Mehrzahl von Reflektionsflächen aufweisen und bei der die Reflektionsflächen mit einer räumlichen Ausrichtung derart versehen sind, daß Strahlungswege direkt von den Heizstrahlern (30) emittierter Heizstrahlung und Strahlungswege reflektierter Heizstrahlung zur Generierung einer vorgebbaren wärmeverteilung im Bereich der Vorformlinge (1) überlagert sind, **dadurch gekennzeichnet, daß** im Bereich der Heizstrecke (24) ein Heizkanal (42) angeordnet ist, der von einem geschlossenen Boden (43) begrenzt ist und bei dem gegenüberliegend zum Boden (43) ein Reflektor (46) angeordnet ist.

19. Vorrichtung nach Anspruch 18, **dadurch gekennzeichnet, daß** die Heizstrecke (24) tunnelartig ausgebildet ist.

20. Vorrichtung nach Anspruch 18 oder 19, **dadurch gekennzeichnet, daß** im Bereich der Heizstrecke (24) angeordnete Heizstrahler (30) als NIR-Strahler ausgebildet sind.

## Claims

1. A method for blow moulding containers (2), in which a preform (1) made from a thermoplastic material is shaped into the container (2) within a blow mould (4) under the action of blowing pressure after thermal conditioning along a transport path in the region of a heating section (24), and in which reflections within the heating section (24) are orientated by a spatial arrangement of a plurality of reflection surfaces such that a predeterminable heat distribution is generated in the region of the preform (1), **characterised in that** the radiant heat emitted by the radiant heater (30) is reflected by at least one reflector (46) arranged opposite a closed base (43) of a heating channel (42).

2. A method according to Claim 1, **characterised in that** the preform (1) is transported through a tunnel-like heating section.

3. A method according to Claim 1 or 2, **characterised in that** the preform (1) is tempered by NIR radiators.

4. A method according to one of Claims 1 to 3, **characterised in that** radiant heat emitted by the radiant heaters (30) is reflected in the direction of the preform (1) by at least one radiant reflector (61) arranged downstream of the radiant heaters (30).

5. A method according to one of Claims 1 to 4, **characterised in that** radiant heat emitted by the radiant heater (30) is reflected in the direction of the preform (1) by at least one lateral reflector (44) delimiting the heating channel (42).

6. A method according to one of Claims 1 to 5, **characterised in that** the radiant heat is reflected by a reflector (46) provided with a contoured reflection surface.

7. A method according to Claim 6, **characterised in that** the radiant heat is reflected by a metal reflector (46).

8. A method according to one of Claims 1 to 7, **characterised in that** at least one reflector is acted upon by a cooling gas.

9. A method according to Claim 8, **characterised in that** the cooling gas is conducted through a hollow profile.

10. A method according to one of Claims 1 to 9, **characterised in that** a contoured reflection surface provided by the reflector (46) is positioned as a curved profile open in the direction of the heater box (45).

11. A method according to one of Claims 1 to 10, **characterised in that** the preform (1) is shielded against the effect of radiant heat in the region of a mouth portion (21).

12. A method according to Claim 11, **characterised in that** the preform (1) is shielded against the effect of radiant heat below a supporting ring (54).

13. A method according to one of Claims 1 to 12, **characterised in that** a collar (53) for shielding the mouth portion (21) of the preform (1) is positioned at a distance of a maximum of 5 mm from a side wall of the preform (1).

14. A method according to one of Claims 1 to 13, **characterised in that** the radiant heat emitted by the radiant heater (30) is conducted through at least one filter plate (60).

15. A method according to Claim 14, **characterised in that** the filter plate (60) is cooled.

16. A method according to one of Claims 1 to 15, **characterised in that** the lateral reflector (44) is cooled.

17. A method according to one of Claims 1 to 16, **characterised in that** the reflector (46) arranged opposite the base (43) of the heating channel (42) is cooled.

18. A device for blow moulding containers (2) from a thermoplastic material, which has at least one heating section (24) arranged along a transport path of a preform (1) and a blowing station provided with a blow mould, and in which reflectors (44, 46, 61) are arranged within the heating section (24), which reflectors have a plurality of reflection surfaces and in which the reflection surfaces are provided with a spatial orientation such that radiation paths of radiant heat emitted directly by the radiant heaters (30) and radiation paths of reflected radiant heat are superimposed to generate a predeterminable heat distribution in the region of the preforms (1), **characterised in that**, arranged in the region of the heating section (24), there is a heating channel (42) which is delimited by a closed base (43) and in which a reflector (46) is arranged opposite the base (43).

19. A device according to Claim 18, **characterised in that** the heating section (24) is constructed in the manner of a tunnel.

20. A device according to Claim 18 or 19, **characterised in that** radiant heaters (30) arranged in the region of the heating section (24) are constructed as NIR radiators.

## Revendications

1. Dispositif pour le formage par soufflage de récipients (2), dans lequel une préforme (1) en matière thermoplastique est transformée, à l'intérieur d'un moule (4), sous l'effet de la pression de soufflage, en un récipient (2), après un conditionnement thermique le long d'une voie de transport, dans la région d'un parcours de chauffage (24), et dans lequel des réflexions sont aménagées, dans le parcours de chauffage (24), par un agencement spatial d'une pluralités de surfaces de réflexion de sorte qu'une répartition de chaleur prédéfinie soit générée dans la zone de la préforme (1), **caractérisé en ce que** le rayonnement thermique, émis par le radiateur (30), est réfléchi par au moins un réflecteur (46), qui est disposé à l'opposé d'un fond fermé (43) d'un canal de chauffage (42).

2. Procédé selon la revendication 1, **caractérisé en ce que** la préforme (1) est transportée à travers un parcours de chauffage en forme de tunnel.

3. Procédé selon revendication 1 ou 2, **caractérisé en ce que** la préforme (1) est mise à température par des radiateurs NIR.

4. Procédé selon l'une des revendications 1 à 3, **caractérisé en ce que** le rayonnement, émis par les radiateurs (30), est réfléchi, en direction de la préforme (1), par au moins un réflecteur en acier (61), qui est disposé derrière les radiateurs (30).

5. Procédé selon l'une des revendications 1 à 4, **caractérisé en ce que** le rayonnement thermique, émis par le radiateur (30), est réfléchi, en direction de la préforme (1), par au moins un réflecteur latéral (44), qui limite le canal de chauffage (42).

6. Procédé selon l'une des revendications 1 à 5, **caractérisé en ce que** le rayonnement thermique est réfléchi par un réflecteur (46), qui est pourvu d'une surface de réflexion conformée.

7. Procédé selon la revendication 6, **caractérisé en ce que** le rayonnement thermique est réfléchi par un réflecteur (46) métallique.

8. Procédé selon l'une des revendications 1 à 7, **caractérisé en ce qu'**au moins un réflecteur est soumis à l'action d'un gaz de refroidissement.

9. Procédé selon la revendication 8, **caractérisé en ce que** le gaz de refroidissement est conduit à travers un profilé creux.

10. Procédé selon l'une des revendications 1 à 9, **caractérisé en ce qu'**une surface de réflexion conformée du réflecteur (46) est positionnée, en tant que profilé courbé, ouvert en direction de la caisse de chauffage (45).

11. Procédé selon l'une des revendications 1 à 10, **caractérisé en ce que** la préforme (1) est protégée contre le rayonnement thermique, agissant dans la région d'une section de goulot (21).

12. Procédé selon la revendication 11, **caractérisé en ce que** la préforme (1) est protégée contre l'effet du rayonnement thermique au-dessous d'une bague de support (54).

13. Procédé selon l'une des revendications 1 à 12, **caractérisé en ce que**, pour protéger la section de goulot (21) de la préforme (1), une collerette (53) est positionnée à une distance de 5 mm au plus de la paroi latérale de la préforme (1).

14. Procédé selon l'une des revendication 1 à 13, **caractérisé en ce que** le rayonnement thermique, émis par le radiateur (30), est conduit à travers au moins une plaque de filtrage (60).

15. Procédé selon la revendication 14, **caractérisé en ce que** la plaque de filtrage (60) est refroidie

16. Procédé selon l'une des revendications 1 à 15, **caractérisé en ce que** le réflecteur latéral (44) est refroidi.

17. Procédé selon l'une des revendications 1 à 16, **caractérisé en ce que** le réflecteur (46), disposé à l'opposé du fond (43) du canal de chauffage (42), est refroidi.

18. Dispositif pour le formage par soufflage de récipients (2) en matière thermoplastique, qui est doté d'au moins un parcours de chauffage (24), disposé le long d'une voie de transport d'une préforme (1), et d'un poste de soufflage, qui est pourvu d'un moule de soufflage, et dans lequel sont disposés, dans le parcours de chauffage (24), des réflecteurs (44, 46, 61), qui sont dotés d'une pluralité de surfaces de réflexion, et dans lequel les surfaces de réflexion présentent un agencement spatial, de sorte que les trajets des rayons du rayonnement thermique, directement émis par les radiateurs (30), et les trajets des rayons du rayonnement thermique réfléchi se superposent pour générer une répartition de chaleur prédéfinie dans la zone de la préforme (1), **caractérisé en ce que**, dans la région du parcours de chauffage (24), est disposé un canal de chauffage (24), qui est limité par un fond fermé (43), et dans lequel un réflecteur (46) est disposé à l'opposé du fond (43).

19. Dispositif selon la revendication 18, **caractérisé en ce que** le parcours de chauffage (24) est réalisé en forme de tunnel.

20. Dispositif selon revendication 18 ou 19, **caractérisé en ce que** les radiateurs (30), disposés dans la zone du parcours de chauffage (24), sont des radiateurs NIR.
